# EUROPEAN PATENT APPLICATION

(11) **EP 3 929 832 A1**
(43) Date of publication of application: **29.12.2021**
(21) Application number: 21181063.5
(22) Date of filing: 23.06.2021
(51) Int. Cl.: G06Q 10/00, G06Q 10/08, G06Q 10/10, G06Q 50/00

(54) **VISUAL PRODUCT IDENTIFICATION**

(30) Priority: 24.06.2020 US 202063043248 P
(71) Applicant: Maui Jim, Inc., Peoria IL 61615 (US)
(72) Inventor: YOUNG, Quentin T., Peoria (US); FEROLO, James Raymond, Peoria (US); UDELL, Chad E., Metamora (US); RICHEY, Steve, Morton (US)
(74) Representative: Zacco Denmark A/S

(57) **Abstract**

A model for visual product identification uses object detection with machine learning. Image acquisition with augmented reality can improve the model's identification, which may include classifying those images that is further verified with machine learning. Usage of the visual product identification data can further improve the model.

## Description

### BACKGROUND

Businesses may rely on different mechanisms for managing inventory in a retail environment. The inventory management may include product identification for tracking inventory of the identified product. There may be different ways to identify products including the use of computer technology.

### SUMMARY

This disclosure relates generally to a model for visual product identification (VPI) using object detection with machine learning. Image acquisition with augmented reality can improve the model's identification, which may include classifying those images that is further verified with machine learning. Usage of the visual product identification data can further improve the model.

In one embodiment, a method for visual product identification includes providing augmented reality guides for image collection of a product, receiving metadata related to the product from the image collection, generating a model for checking and monitoring the received metadata, providing the model for usage for product identification, and improving the model based on data gathered from the usage of the model.

### BRIEF DESCRIPTION OF THE DRAWINGS

The system and method may be better understood with reference to the following drawings and description. Non-limiting and non-exhaustive embodiments are described with reference to the following drawings. The components in the drawings are not necessarily to scale, emphasis instead being placed upon illustrating the principles of the invention. In the drawings, like referenced numerals designate corresponding parts throughout the different views.
Figure 1 illustrates a block diagram of an example visual product identification (VPI) system.
Figure 2 is a flow chart of visual product identification (VPI) example steps.
Figure 3 is a flow chart of an acquire phase.
Figure 4 is an example screenshot of metadata for image acquisition.
Figure 5 is an example screenshot of the image capture.
Figure 6 is another example screenshot of the image capture.
Figure 7 is an example screenshot of completion of image capture for a product.
Figure 8 is a flow chart of a classify phase.
Figure 9 is a flow chart of a learn phase.
Figure 10 is an example screenshot of transformed images.
Figure 11 is a flow chart of an integrate phase.
Figure 12 is an example screenshot of model configuration.
Figure 13 is an example screenshot of augmented reality capabilities.
Figure 14 is another example screenshot of augmented reality capabilities showing misalignment.
Figure 15 is another example screenshot of augmented reality capabilities showing misalignment.
Figure 16 is an example screenshot of alignment of the products.
Figure 17 is another example screenshot of alignment of the products.
Figure 18 is another example screenshot showing misalignment of the products.
Figure 19 is another example screenshot showing an improper tilting notification for product alignment.
Figure 20 is a flow chart of a usage phase.
Figure 21 is an example screenshot of a check-in process.
Figure 22 is an example screenshot of coachmarks for a user.
Figure 23 is an example screenshot showing augmented reality data.
Figure 24 is an example screenshot showing static confirmation.
Figure 25 is an example screenshot showing a source display.
Figure 26 is an example screenshot showing an example of product confirmation.
Figure 27 is an example screenshot showing indicators for the product confirmation.
Figure 28 is an example screenshot showing an example prompt for inventory confirmation.
Figure 29 is an example screenshot showing an example of results from the inventory confirmation.
Figure 30 is an example screenshot showing metadata corrections.
Figure 31 is an example screenshot showing metadata display with augmented reality.
Figure 32 is a flow chart of an improve phase.

### DETAILED DESCRIPTION

By way of introduction, the disclosed embodiments relate to systems and methods for creating and utilizing a model for visual product identification (VPI) using object detection with machine learning. Image acquisition with augmented reality can improve the model's identification, which may include classifying those images that is further verified with machine learning. Usage of the visual product identification data can further improve the model.

Reference will now be made in detail to exemplary embodiments of the invention, examples of which are illustrated in the accompanying drawings. When appropriate, the same reference numbers are used throughout the drawings to refer to the same or like parts. The numerous innovative teachings of the present application will be described with particular reference to presently preferred embodiments (by way of example, and not of limitation). The present application describes several inventions, and none of the statements below should be taken as limiting the claims generally.

For simplicity and clarity of illustration, the drawing figures illustrate the general manner of construction, and description and details of well-known features and techniques may be omitted to avoid unnecessarily obscuring the invention. Additionally, elements in the drawing figures are not necessarily drawn to scale, some areas or elements may be expanded to help improve understanding of embodiments of the invention.

The word 'couple' and similar terms do not necessarily denote direct and immediate connections, but also include connections through intermediate elements or devices. For purposes of convenience and clarity only, directional (up/down, etc.) or motional (forward/back, etc.) terms may be used with respect to the drawings. These and similar directional terms should not be construed to limit the scope in any manner. It will also be understood that other embodiments may be utilized without departing from the scope of the present disclosure, and that the detailed description is not to be taken in a limiting sense, and that elements may be differently positioned, or otherwise noted as in the appended claims without requirements of the written description being required thereto.

The terms "first," "second," "third," "fourth," and the like in the description and the claims, if any, may be used for distinguishing between similar elements and not necessarily for describing a particular sequential or chronological order. It is to be understood that the terms so used are interchangeable. Furthermore, the terms "comprise," "include," "have," and any variations thereof, are intended to cover non-exclusive inclusions, such that a process, method, article, apparatus, or composition that comprises a list of elements is not necessarily limited to those elements, but may include other elements not expressly listed or inherent to such process, method, article, apparatus, or composition.

The aspects of the present disclosure may be described herein in terms of functional block components and various processing steps. It should be appreciated that such functional blocks may be realized by any number of hardware and/or software components configured to perform the specified functions. For example, these aspects may employ various integrated circuit components, e.g., memory elements, processing elements, logic elements, look-up tables, and the like, which may carry out a variety of functions under the control of one or more microprocessors or other control devices.

Similarly, the software elements of the present disclosure may be implemented with any programming or scripting languages with the various algorithms being implemented with any combination of data structures, objects, processes, routines, or other programming elements. Further, it should be noted that the present disclosure may employ any number of conventional techniques for data transmission, signaling, data processing, network control, and the like.

The particular implementations shown and described herein are for explanatory purposes and are not intended to otherwise be limiting in any way. Furthermore, the connecting lines shown in the various figures contained herein are intended to represent exemplary functional relationships and/or physical couplings between the various elements. It should be noted that many alternative or additional functional relationships or physical connections may be present in a practical incentive system implemented in accordance with the disclosure.

As will be appreciated by one of ordinary skill in the art, aspects of the present disclosure may be embodied as a method or a system. Furthermore, these aspects of the present disclosure may take the form of a computer program product on a tangible computer-readable storage medium having computer-readable program-code embodied in the storage medium. Any suitable computer-readable storage medium may be utilized, including hard disks, CD-ROM, optical storage devices, magnetic storage devices, and/or the like. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means, which implement the function, specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

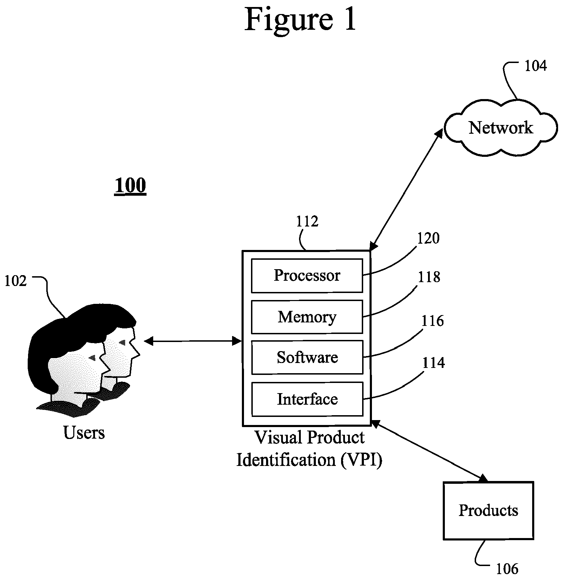

Figure 1 illustrates a block diagram of an example system 100. The system 100 may include functionality for managing inventory and tracking products 106 with the visual production identification (VPI) 112. The system 100 may include a network 104 for retrieval or storage of information about the products 106 including product identification information. In alternative embodiments, the product information may be stored locally rather than over the network 104.

The products 106 may be eyewear (e.g. glasses, or sunglasses) in one embodiment. In alternative embodiments, the products 106 may include other types of products other than eyewear.

The VPI 112 may include or be part of a computing device. In a retail embodiment, there may be at least one VPI 112 for each retail location for inventory management at that location. In other embodiments, employees may be able to utilize their own mobile device as the VPI 112 by running an application on the mobile device that performs the functions described below. In these embodiments, the VPI 112 may be implemented in software that is run by a computing device, such as an application or app that is run on a mobile computing device. In other embodiments, the VPI may be any hardware or software used for performing the functions described herein. In an example, where the VPI 112 is the computing device rather than just the software, the VPI 112 may include a processor 120, a memory 118, software 116 and a user interface 114. In alternative embodiments, the VPI 112 may be multiple devices to provide different functions and it may or may not include all of the user interface 114, the software 116, the memory 118, and/or the processor 120.

The user interface 114 may be a user input device, a display, or a camera. The user interface 114 may include a keyboard, keypad or a cursor control device, such as a mouse, or a joystick, touch screen display, remote control or any other device operative to allow a user or administrator to interact with the VPI 112. The user interface 114 may include a user interface configured to allow a user and/or an administrator to interact with any of the components of the VPI 112. The user interface 114 may include a display coupled with the processor 120 and configured to display an output from the processor 120. The display (not shown) may be a liquid crystal display (LCD), an organic light emitting diode (OLED), a flat panel display, a solid state display, a cathode ray tube (CRT), a projector, a printer or other now known or later developed display device for outputting determined information. The display may act as an interface for the user to see the functioning of the processor 120, or as an interface with the software 116 for providing data.

The user interface 114 of the VPI 112 may be a camera or other image acquisition component for acquiring images of the products 106. As described below, a user may utilize the VPI 112 for acquiring product images. This implementation of the user interface 114 as a camera may be in addition to the embodiments described above for receiving user input.

The processor 120 in the VPI 112 may include a central processing unit (CPU), a graphics processing unit (GPU), a digital signal processor (DSP) or other type of processing device. The processor 120 may be a component in any one of a variety of systems. For example, the processor 120 may be part of a standard personal computer or a workstation. The processor 120 may be one or more general processors, digital signal processors, application specific integrated circuits, field programmable gate arrays, servers, networks, digital circuits, analog circuits, combinations thereof, or other now known or later developed devices for analyzing and processing data. The processor 120 may operate in conjunction with a software program (i.e. software 116), such as code generated manually (i.e., programmed). The software 116 may include the functions described below for classifying images, machine learning, integrating the model, utilization of the model, and improvement of the model. The functions described below for the VPI 112 may be implemented at least partially in software (e.g. software 116) in some embodiments.

The processor 120 may be coupled with the memory 118, or the memory 118 may be a separate component. The software 116 may be stored in the memory 118. The memory 118 may include, but is not limited to, computer readable storage media such as various types of volatile and non-volatile storage media, including random access memory, read-only memory, programmable read-only memory, electrically programmable read-only memory, electrically erasable read-only memory, flash memory, magnetic tape or disk, optical media and the like. The memory 118 may include a random access memory for the processor 120. Alternatively, the memory 118 may be separate from the processor 120, such as a cache memory of a processor, the system memory, or other memory. The memory 118 may be an external storage device or database for storing recorded tracking data, or an analysis of the data. Examples include a hard drive, compact disc ("CD"), digital video disc ("DVD"), memory card, memory stick, floppy disc, universal serial bus ("USB") memory device, or any other device operative to store data. The memory 118 is operable to store instructions executable by the processor 120.

The functions, acts or tasks illustrated in the figures or described herein may be performed by the programmed processor executing the instructions stored in the software 116 or the memory 118. The functions, acts or tasks are independent of the particular type of instruction set, storage media, processor or processing strategy and may be performed by software, hardware, integrated circuits, firm-ware, micro-code and the like, operating alone or in combination. Likewise, processing strategies may include multiprocessing, multitasking, parallel processing and the like. The processor 120 is configured to execute the software 116.

The present disclosure contemplates a computer-readable medium that includes instructions or receives and executes instructions responsive to a propagated signal, so that a device connected to a network can communicate voice, video, audio, images or any other data over a network. The user interface 114 may be used to provide the instructions over the network via a communication port. The communication port may be created in software or may be a physical connection in hardware. The communication port may be configured to connect with a network, external media, display, or any other components in system 100, or combinations thereof. The connection with the network may be a physical connection, such as a wired Ethernet connection or may be established wirelessly as discussed below. Likewise, the connections with other components of the system 100 may be physical connections or may be established wirelessly.

Although not shown, data used by the VPI 112 may be stored in locations other than the memory 118, such as a database connected through the network 104. For example, the images that are acquired may be stored in the memory 118 and/or stored in a database accessible via the network 104. Likewise, the machine learning model may be operated by the VPI 112 but may include functionality stored in the memory 118 and/or stored in a database accessible via the network 104. The VPI 112 may include communication ports configured to connect with a network. The network or networks that may connect any of the components in the system 100 to enable communication of data between the devices may include wired networks, wireless networks, or combinations thereof. The wireless network may be a cellular telephone network, a network operating according to a standardized protocol such as IEEE 802.11, 802.16, 802.20, published by the Institute of Electrical and Electronics Engineers, Inc., or WiMax network. Further, the network(s) may be a public network, such as the Internet, a private network, such as an intranet, or combinations thereof, and may utilize a variety of networking protocols now available or later developed including, but not limited to TCP/IP based networking protocols. The network(s) may include one or more of a local area network (LAN), a wide area network (WAN), a direct connection such as through a Universal Serial Bus (USB) port, and the like, and may include the set of interconnected networks that make up the Internet. The network(s) may include any communication method or employ any form of machine-readable media for communicating information from one device to another.

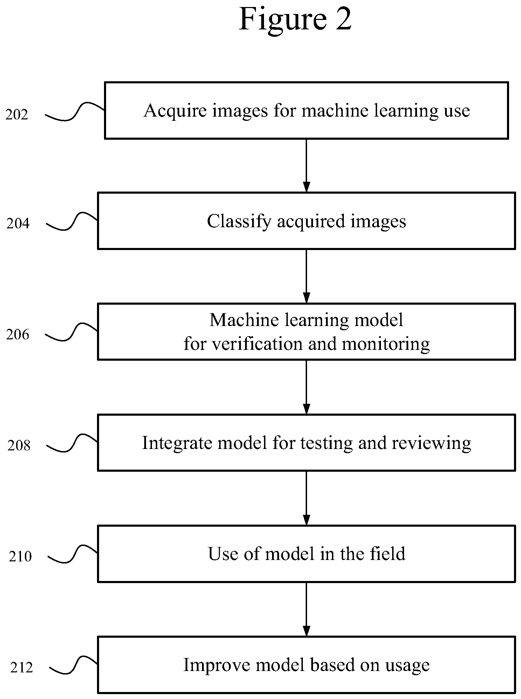

The VPI 112 performs the operations described in the embodiments below. For example, Figure 2 illustrates example functions performed by the VPI 112.

Figure 2 is a flow chart of visual product identification (VPI) example steps. Each of the steps shown in Figure 2 is further described in additional figures below. In block 202, the Acquire step includes an application that allows non-expert users to capture images appropriate for machine learning use. In block 204, the Classify step includes classifying gathered images using human-in-the-loop verification in one embodiment. In block 206, the Learn step includes a machine learning process with accuracy checking, integrity verification, and real-time monitoring. In block 208, the Integrate step includes the model being integrated into the mobile solution with testing and reviewing. In block 210, the Use step includes a specialized user experience that is created and integrated with the model, such as an application ("App") that is deployed to the field with performance verified by analytics. In block 212, the Improve step includes data gathered in the application that is used to improve model accuracy with real-world images.

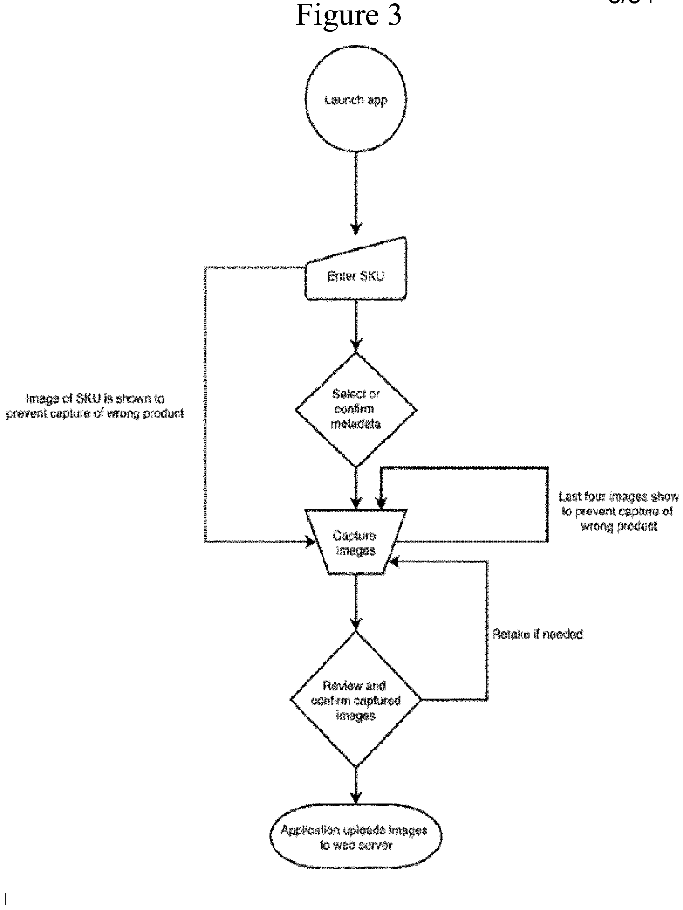

Figure 3 is a flow chart of an acquire phase. Figure 3 is one embodiment of the Acquire step illustrated in block 202 of Figure 2. The acquire phase may include an application that allows non-expert users to capture images appropriate for machine learning use. In one embodiment, the VPI 112 may be implemented in an app for a mobile device. This is merely one example embodiment and there may be many other implementations and embodiments. The app may be customized and developed to allow novice users to capture data. The image capture application may provide an active guide process to facilitate good image acquisition. The application may focus on ease-of-use and mitigation of common errors with several builtin utilities for working with the machine learning model.

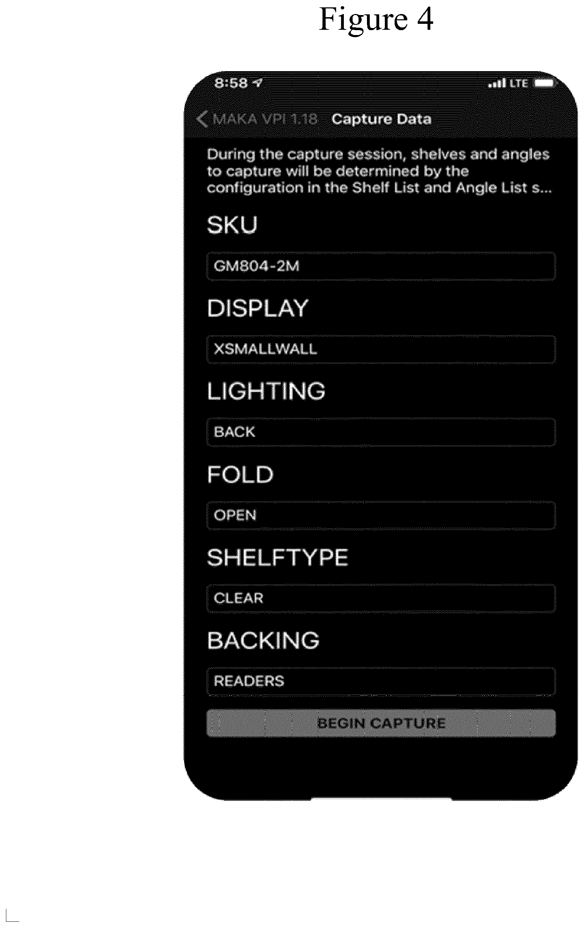

The example embodiment of Figure 3 includes the launching of the app and the entering of SKU numbers for the products 106. The entering of the SKUs may include the selection and confirmation of metadata about the products 106. This metadata may be any additional information about the products and can be entered by the user or provided to the user (e.g. from a database over the network 104). Then the images are captured. Figures 4-7 show further examples of image acquisition or capturing. The process may include multiple images captured for each product to ensure the correct products are associated with their corresponding SKU. The user may be given the option to review and confirm the captured images. In some embodiments, machine learning and metadata stored may automate the confirmation process rather than relying on a user for confirmation. Upon confirmation, the application stores the images and/or uploads the images to a database over the network 104.

Figure 4 is an example screenshot of metadata for image acquisition. Specifically, Figure 4 is a screenshot of the application for confirming metadata about the product (e.g. SKU) and the environment (Display, Lighting, Fold, Shelf, Backing, etc.). The environment metadata is conditions that may be evident in the image. In some embodiments, the user may select the target SKU and any associated metadata. In other embodiments, the model may perform or assist in either SKU selection or associated metadata gathering.

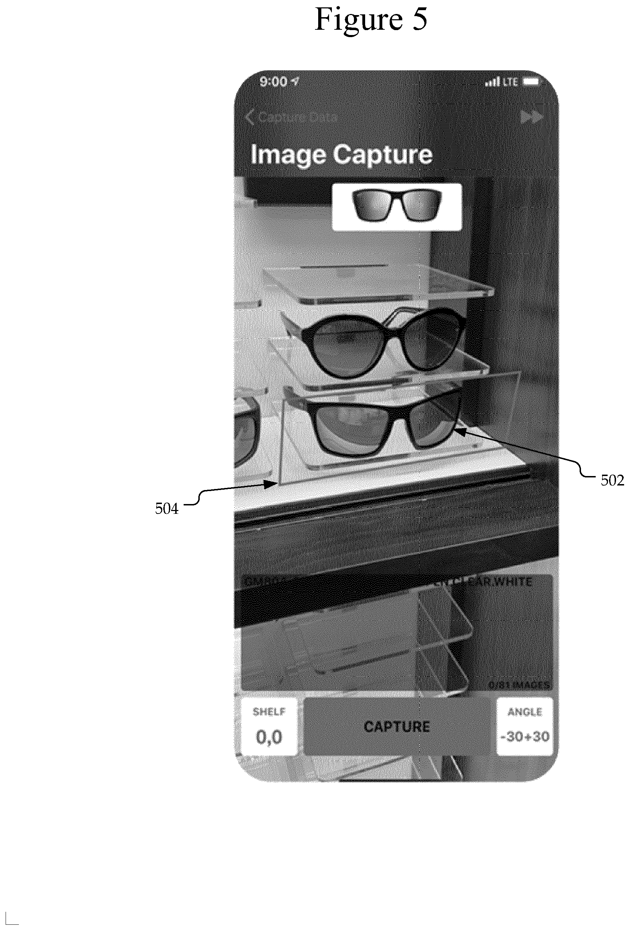

Figure 5 is an example screenshot of the image capture. In one embodiment, an employee may be utilizing a mobile device (e.g. phone) as the VPI 112. The image capturing may be with the camera on the mobile device. Figure 5 illustrates an image capture screen within an app for capturing an image. The product 502 is shown with a three-point perspective polygon guides 504 that allows novice users to capture images correctly.

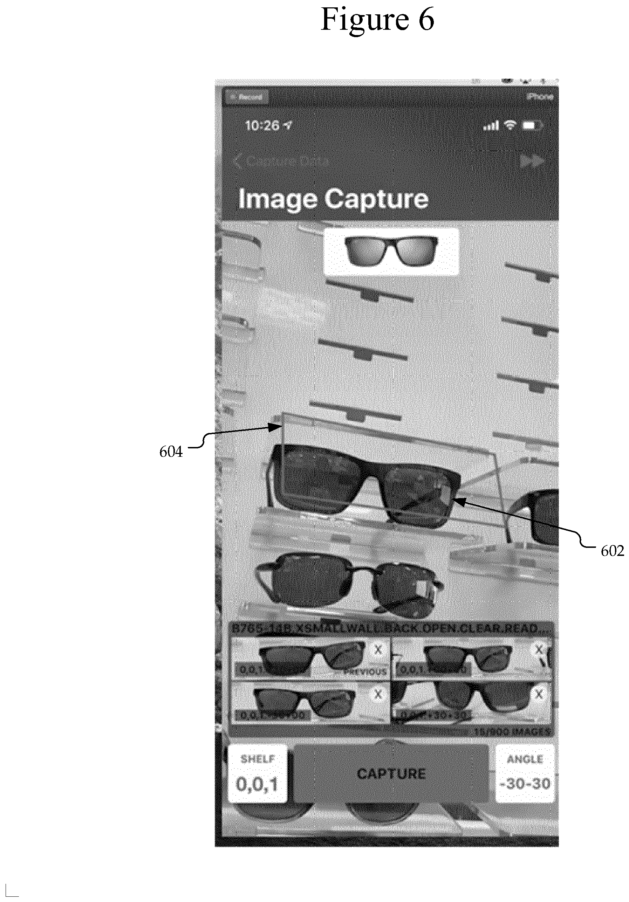

Figure 6 is another example screenshot of the image capture. The product 602 is shown with different guides 604 that allow for capturing images at many different angles. Specifically, the guides are augmented reality (AR) guides shown on the app that assist the user in taking different angles/views of the product. The guides shown in Figures 5 and 6 are at different angles.

For each image captured, the AR guides change and move to direct the user to get different angle images. Image history ensures proper product is not "lost" as user moves around the display. The perspective polygon updates in real-time as the user progresses through the capture process. The images in history can be deleted and retaken if needed.

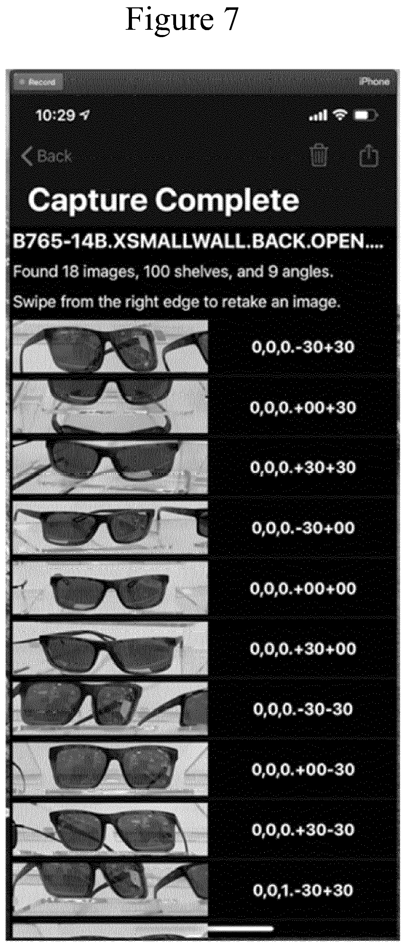

Figure 7 is an example screenshot of completion of image capture for a product. Specifically, Figure 7 illustrates a number of captured images for a particular product that were taken at different angles and from different perspectives. The AR guides assist the user with capturing this variety of images. Specifically, Figure 7 shows all the angles that were captured. For the collection step, the user enters the product name and may provide other details about the product including metadata, such as style, color, shape, size, and inventory (quantity).

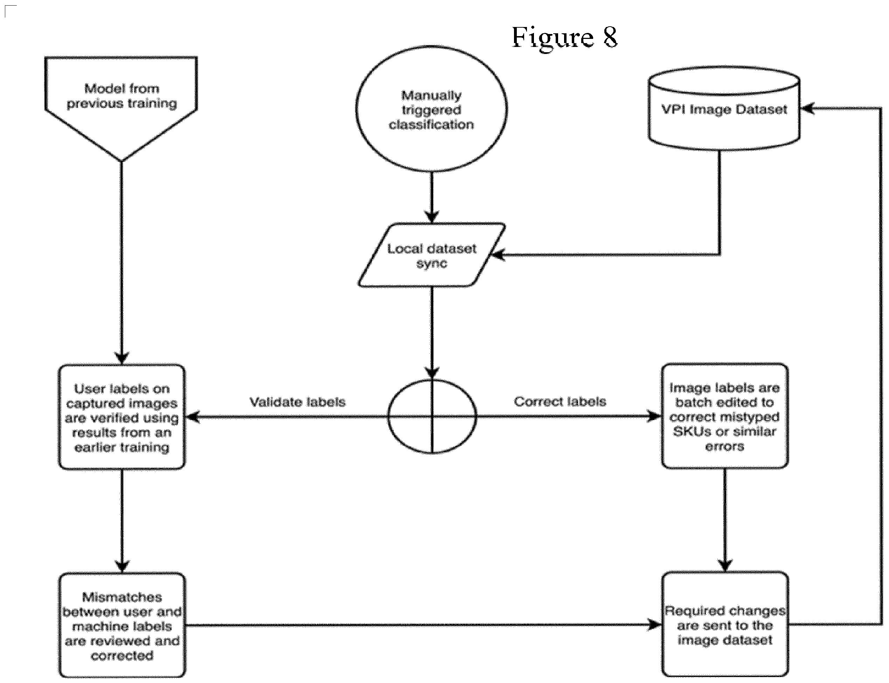

Figure 8 is a flow chart of a classify phase. Figure 8 is one embodiment of the Classify step illustrated in block 204 of Figure 2. The classify phase may include gathered images being classified using human-in-the-loop verification in one embodiment. The classification may include a collection of custom scripts to automate correcting SKUs, validating the dataset, and modifying images. The operations may focus on ensuring data is properly labeled. There may be batch operations to rename or remove images as needed. Usage of a consistent format for image labeling may ensure accuracy. The phase may focus on providing a high-level view into the features of the data and there may be tools available to quickly mitigate labeling errors. In one embodiment, the classification may be through a commandline interface, such as the following example command line interface:
Started main at 2020-03-16 13:14:49.254339, hash
2d26d1314d5e8e68d0358fd51041a1af
   Python 3.7.6 (default, Jan 11 2020, 17:52:44) [Clang 11.0.0 (clang-1100.0.33.16)]
Finding remote images...
Example key: "812-27D.SMALLWALL.TOP.OPEN.CLEAR.WHITE.0,6.-30+30.jpg"
Found 232756 objects in remote
Found 9 key properties per object
Found 544 unique values at index 0 e.g. GM445-2M
Found 7 unique values at index 1 i.e. "DEEPSUNTRAY", "GOLDPEG", "LARGEWALL",
"MEDIUMWALL", "SMALLWALL", "TRAY", "XSMALLWALL"
Found 3 unique values at index 2 i.e. "AMBIENT", "BACK", "TOP"
Found 3 unique values at index 3 i.e. "FOLDED", "NONE", "OPEN"
Found 4 unique values at index 4 i.e. "CLEAR", "NONE", "PEG", "TRAY"
Found 10 unique values at index 5 i.e. "BLUEHAWAII", "FASHION", "FEMALE",
"LIGHTBOX", "MAUIPURE", "NEWBLUE", "NEWGREEN", "PRESCRIPTION", "READERS", "WHITE"
Found 56 unique values at index 6 e.g. 3,3
Found 9 unique values at index 7 i.e. "+00+00", "+00+30", "+00-30", "+30+00", "+30+30", "+30-30", "-30+00", "-30+30", "-30-30"
Found 1 unique values at index 8 i.e. "jpg"
No correction CSV. Done.

Figure 8 may start with a model from previous training. The user labels for the captures images are verified using results for the earlier training. Any mismatches between user and machine labels are reviewed and corrected. Required changes are sent to the image dataset. The VPI image dataset may be a database stored in the network 104. There may be a local dataset sync with the VPI image dataset so that the VPI 112, which may be local to the products can sync images. This can be prompted from manually triggering the classification. In addition to validating the labels, some labels may be corrected. Images labels may be batch edited to correct mistyped SKUs or similar errors. Those changes are sent to the VPI image dataset.

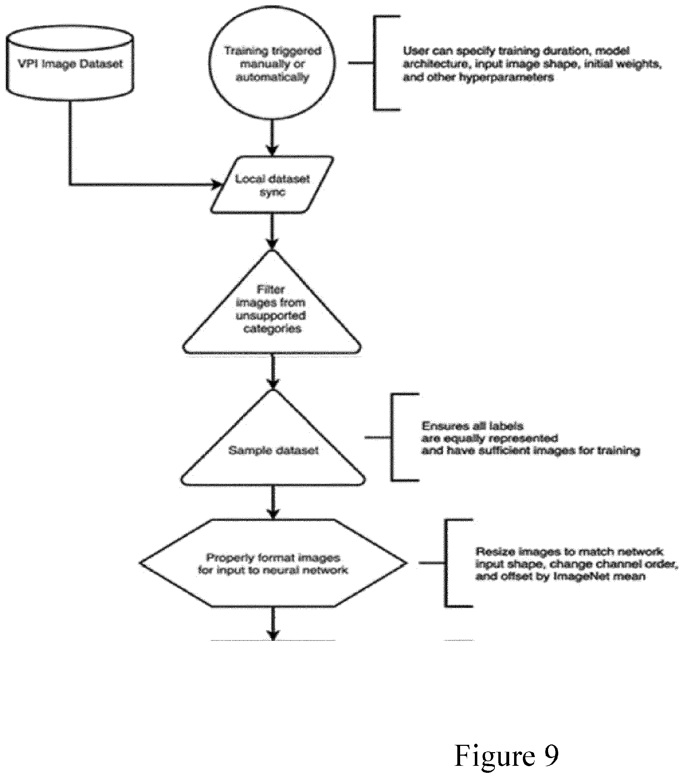

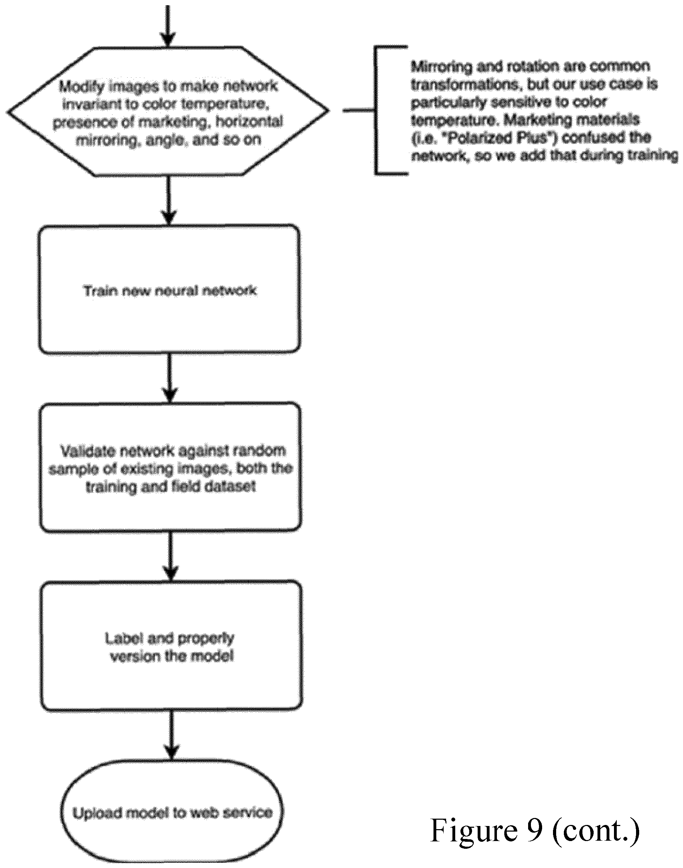

Figure 9 is a flow chart of a learn phase. Figure 9 is one embodiment of the Learn step illustrated in block 206 of Figure 2. The learn phase may include the machine learning process or model with accuracy checking, integrity verification, and real-time monitoring. The training may be triggered manually or automatically. For example, the user can specify training duration, model architecture, input image shape, initial weights and/or other hyperperameters. The local dataset sync may be from the VPI image dataset. The images may be filtered from unsupported categories to get a sample dataset. The sample dataset ensures all labels are equally represented and have sufficient images for training. The images are formatted for input to the neural network. For example, the images may be resized to match network input shape, change channel order, and/or offset by ImageNet mean. The images may be modified to make network invariant to color temperature presence of marketing, horizontal mirroring, angle, etc. The mirroring and rotation are exemplary transformations. In some embodiments, the color temperature may be sensitive. Based on the modified images, the neural network or model is trained. There may be a validation of the neural network or model against a random sample of existing images, both the training and field dataset. The model is labeled and versioned and uploaded for operation.

The dataset may be filtered to ensure all labels are equally represented, and avoid bias. Standard image transformations may be applied or unique image transformations may vary color temperature and place marketing materials over the product.

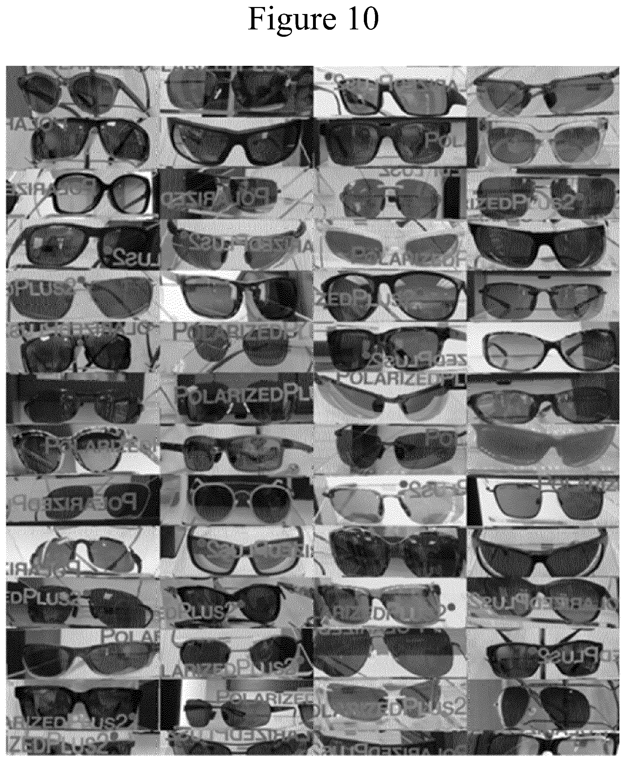

Figure 10 is an example screenshot of transformed images. Specifically, Figure 10 illustrates examples of images transformed for input into the neural network during training. In this embodiment, "Polarized Plus" text is added, which is entirely synthetic within the AR of the app. There is an algorithmic shift in color temperature. The dataset images were captured in the same lighting conditions and without the display glass in place, making these transformations necessary for high accuracy in the field.

The model training may track accuracy of the product identification. There may also be a retraining process that may be part of the training. This training may compare accuracy before and after using the training model with field data. Using field data to retrain the model improves accuracy by exposing the model to real-world conditions, but biases the model to be more likely to guess those products that are the most common in the field. This bias can be compensated using statistical methods.

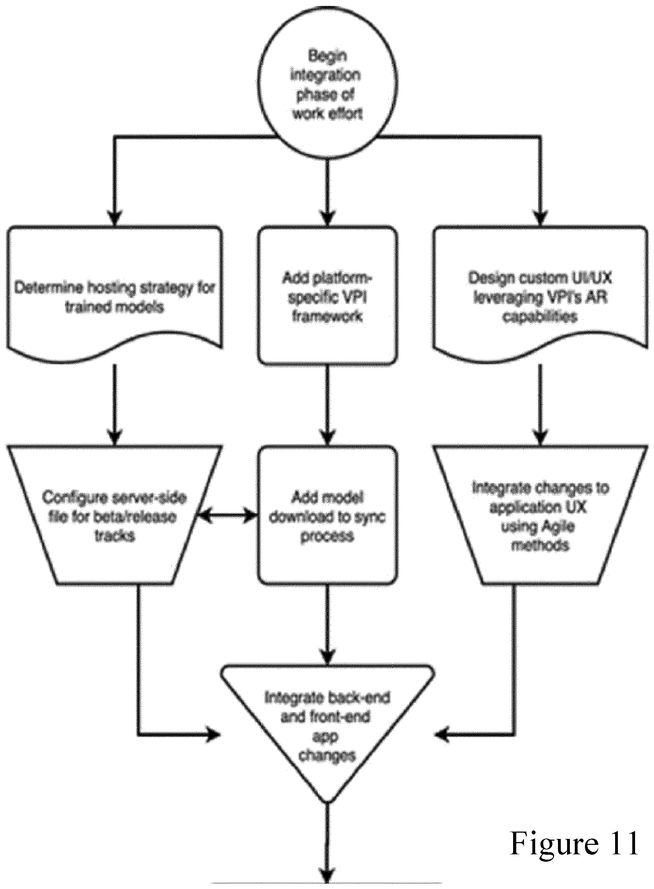

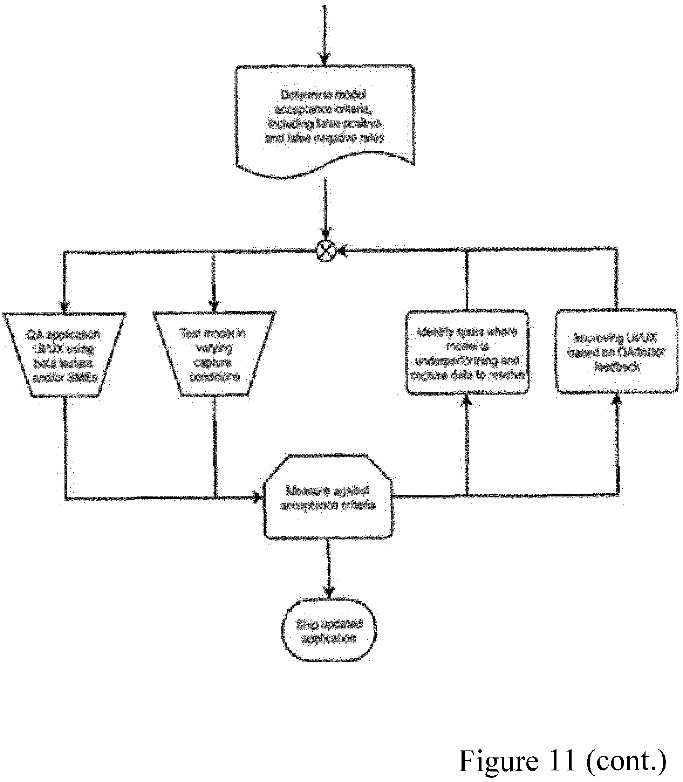

Figure 11 is a flow chart of an integrate phase. Figure 11 is one embodiment of the Integrate step illustrated in block 208 of Figure 2. The integrate phase may include the model being integrated into the mobile solution with stakeholders testing and reviewing in-progress builds. The integration phase may begin with several options. First, the hosting strategy may be determined for the trained models and the server-side file is configured for beta release and the app changes are integrated in back-end and/or front-end app changes. Second, the platform specific VPI framework is added and the model download is added to the sync process for server configuration and/or integration of the app changes. Third, a custom user interface is designed for leveraging AR capabilities that are integrated into the application and into the front-end / back-end. The model acceptance criteria is determined including false positive a false negative rates. There may be a quality assurance application using beta testers. The model may be tested in varying capture conditions. The spots where the model is underperforming are identified and data is captured to resolve. The interface may be improved based on feedback. The acceptance criteria is compared and upon satisfaction, the application can be shipped.

As described, the VPI 112 may be implemented in an application (app) for a mobile device. In one example, there may be a dedicated iOS framework that eases integration into mobile solutions. Models can be hosted on any server over the network 104 and downloaded or accessed when needed. Cloud configuration ensures model updates can be rolled out gradually. The model can be delivered in any format ideal for the target device.

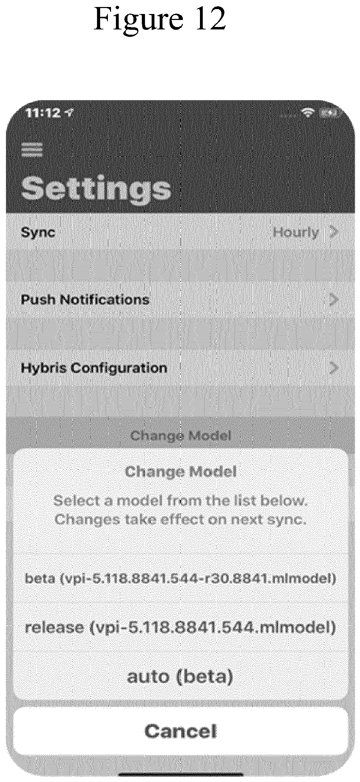

Figure 12 is an example screenshot of model configuration. Production builds may default to the release model. There may be access lists that allow A/B testing of new models in the beta track. Staging builds can switch between tracks or choose based on access list. The model configuration file may be stored on a server and can be updated automatically when new models are created.

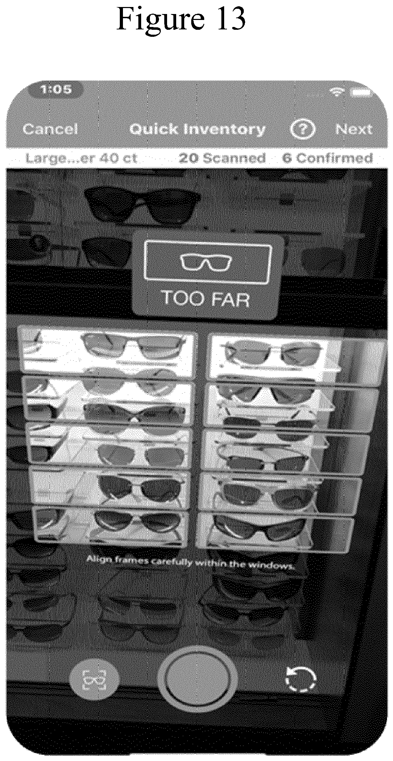

Figure 13 is an example screenshot of augmented reality (AR) capabilities. There may be compensation for device angle and tilt. The distance from user to capture target may be estimated. There may be node placement to allow easy tracking of captured data. Pinned nodes may offer a high-level overview of captured data. High-performance image processing allows real-time feedback and batch capture.

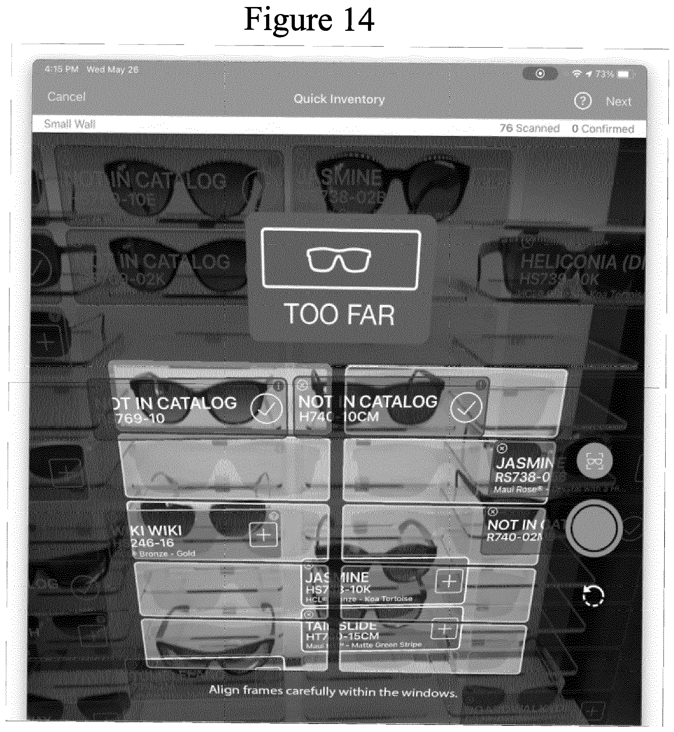

Figure 14 is another example screenshot of augmented reality capabilities showing misalignment. A notification of "too far" is displayed to the user because the alignment is off. In this example, the user's camera is panned towards the floor and needs to be directed straighter.

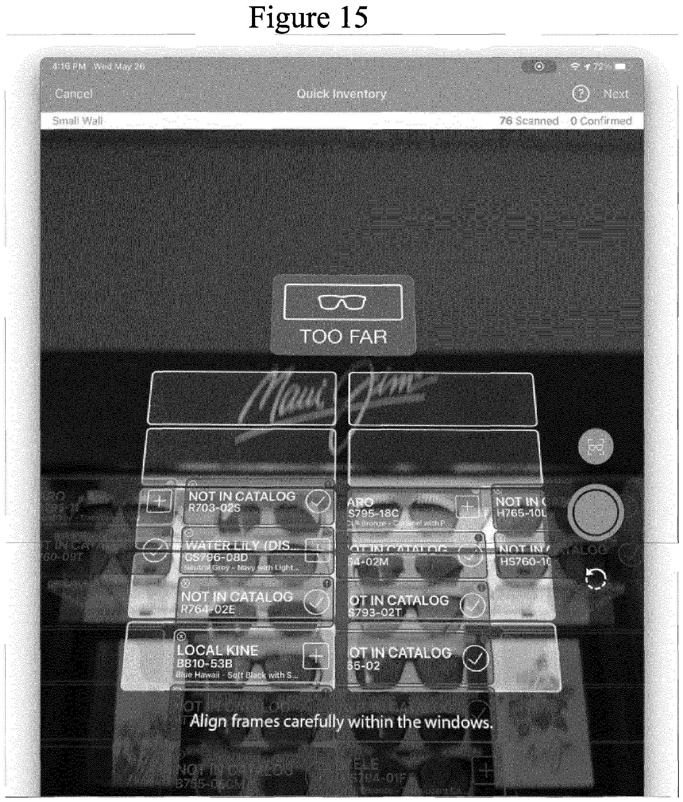

Figure 15 is another example screenshot of augmented reality capabilities showing misalignment. A notification of "too far" is displayed to the user because the alignment is off. In this example, the user's camera is panned even more towards the floor than in Figure 14. A plane adjustment is necessary for proper alignment and product recognition.

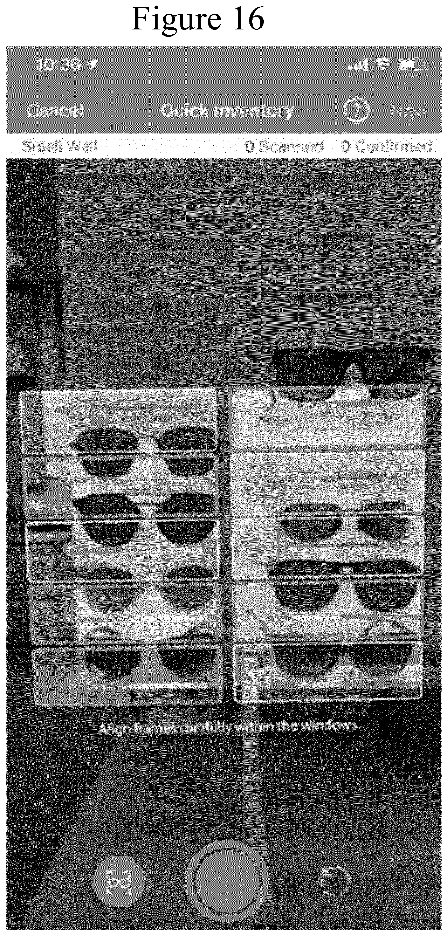

Figure 16 is an example screenshot of alignment of the products. The augmented reality (AR) features may assist the user in aligning the image for multiple products.

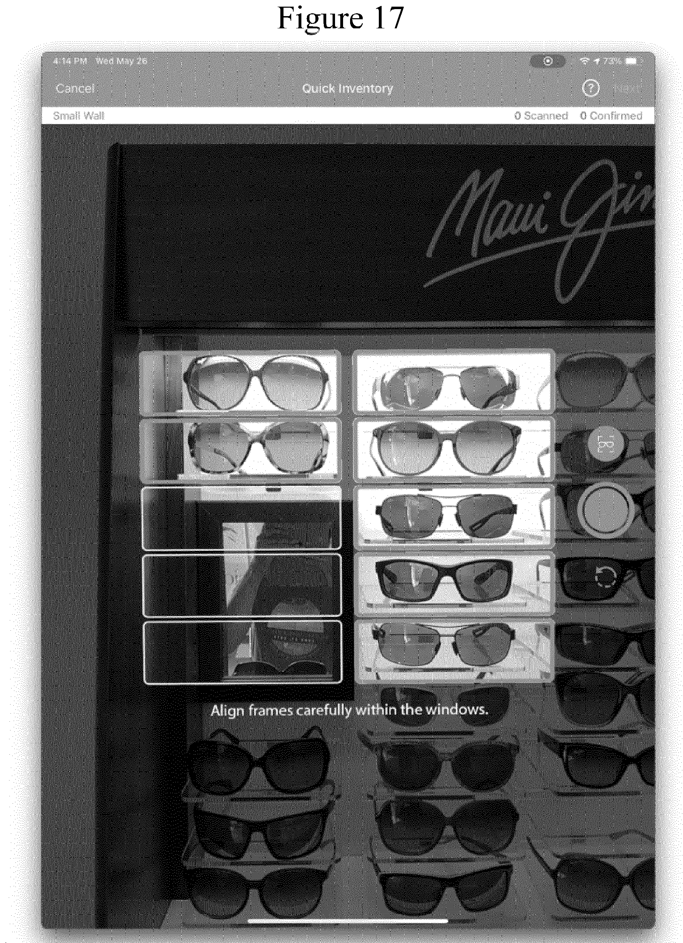

Figure 17 is another example screenshot of alignment of the products. The products are aligned within the windows. Alignment may be signified by the boxes (e.g. a thicker line or a different color). For example, the box may be green to indicate proper alignment and may be white to signify no product in the box. A red box can indicate that a product is not aligned. This alignment is part of the user experience for scanning SKUs.

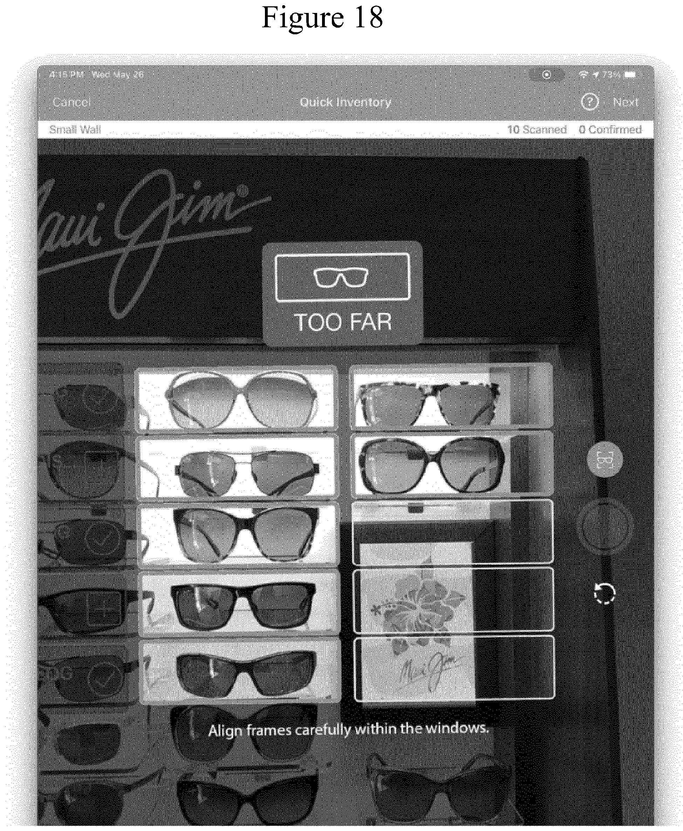

Figure 18 is another example screenshot showing misalignment of the products. The AR alignment in this example is off because the user is too far away from the products to get an accurate reading.

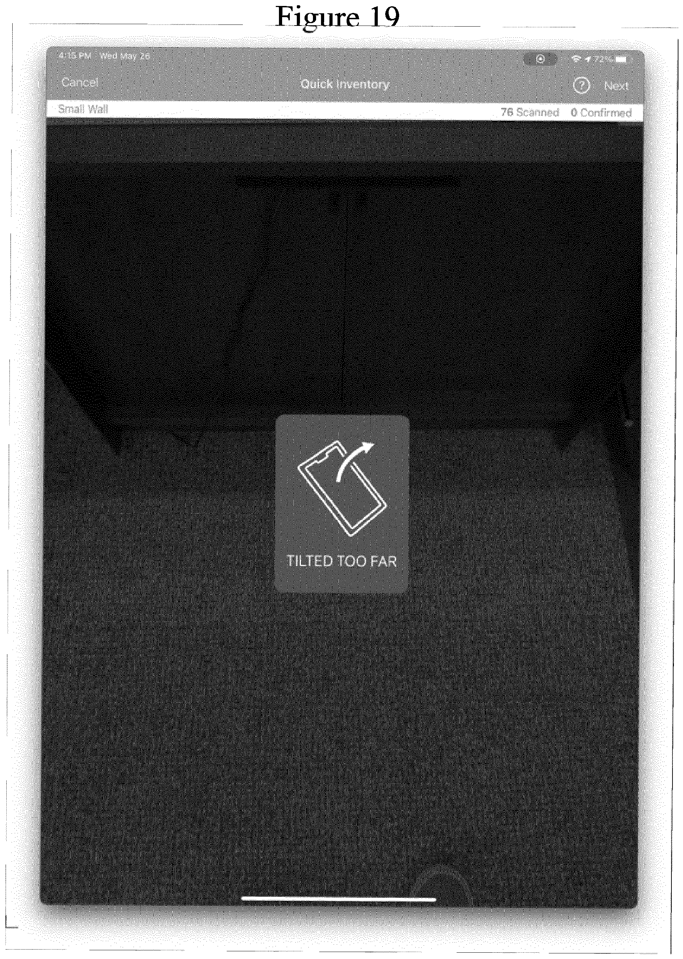

Figure 19 is another example screenshot showing an improper tilting notification for product alignment. If the alignment is off, the user may be provided a notification that the user device (e.g. camera) must be moved to get proper alignment. In this example, the notification is for a tilting adjustment because the device has been tilted too far towards the floor or ceiling. This provides user feedback for improving alignment.

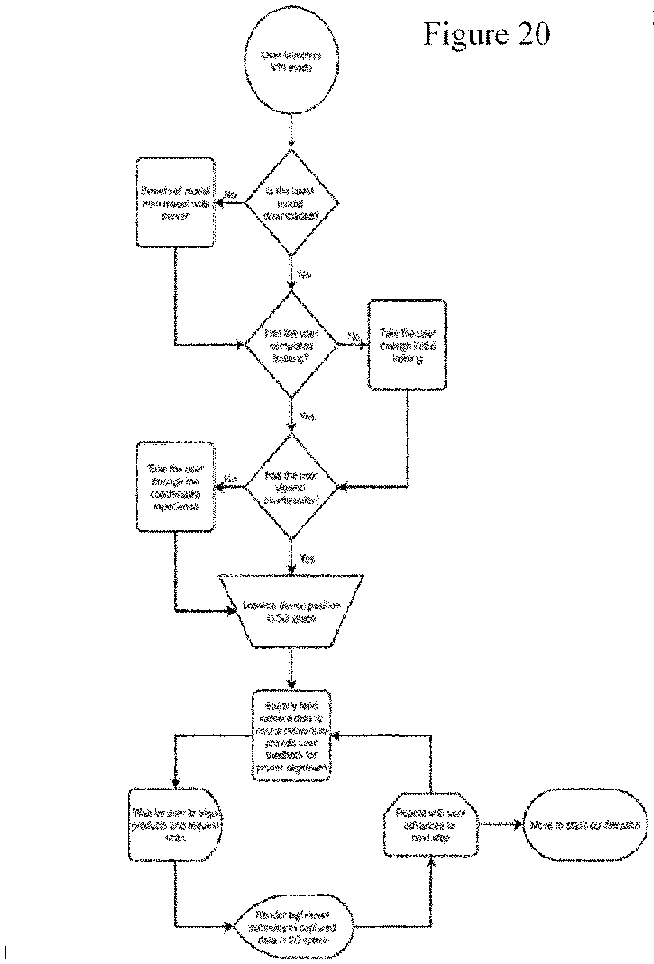

Figure 20 is a flow chart of a usage phase. Figure 20 is one embodiment of the Use step illustrated in block 210 of Figure 2. The use phase may include a specialized user experience that is created and integrated with the model. The app may be deployed to the field and performance verified with analytics.

Figure 20 illustrates that the user launches the VPI mode. The model is checked and if it is not the latest model, then the latest model is accessed (e.g. downloaded from a database). If the user has not completed training, then the user must perform initial training for usage of the VPI. The training may also include viewing coachmarks. The device position should then be localized in 3D space and the camera data is fed to the neural network to provide user feedback for proper alignment. The alignment may help render a high-level summary of captured data in 3D space, which is repeated until moving onto static confirmation.

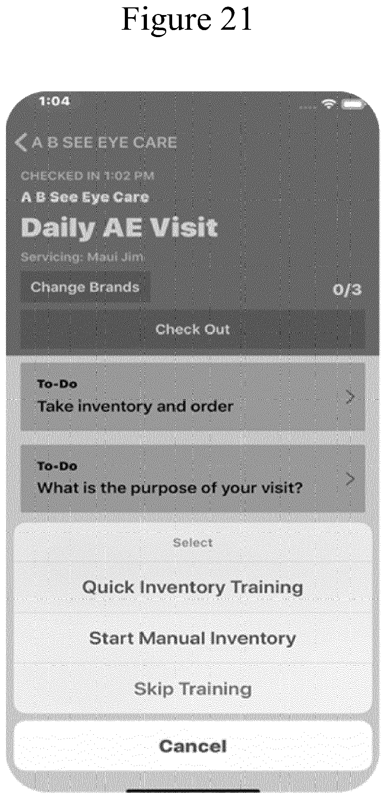

Figure 21 is an example screenshot of a check-in process. The check-in process may be for an operator (e.g. user 102) of the VPI system 112. There may be training process for educating the operator. There may still be a manual inventory option for unsupported display types. The training offered in order to ensure users understand methods for best results

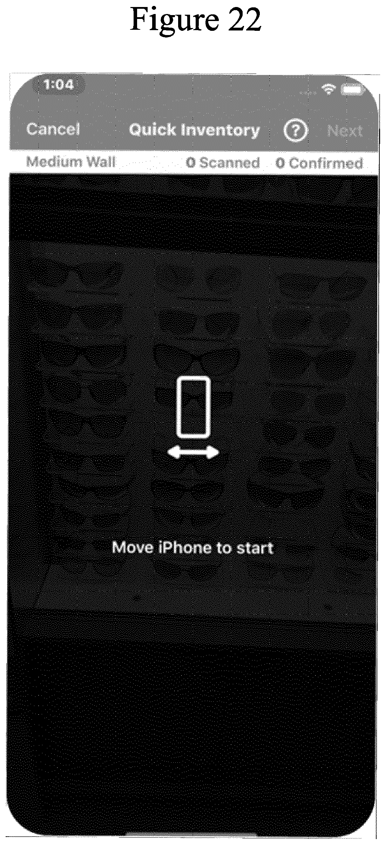

Figure 22 is an example screenshot of coachmarks for a user. There may be continuous on-screen feedback for the capture progress. Coachmarks may be available for users looking for clarification on a feature or user interface element. On-screen directions help ensure the user understands the current phase of the capture process.

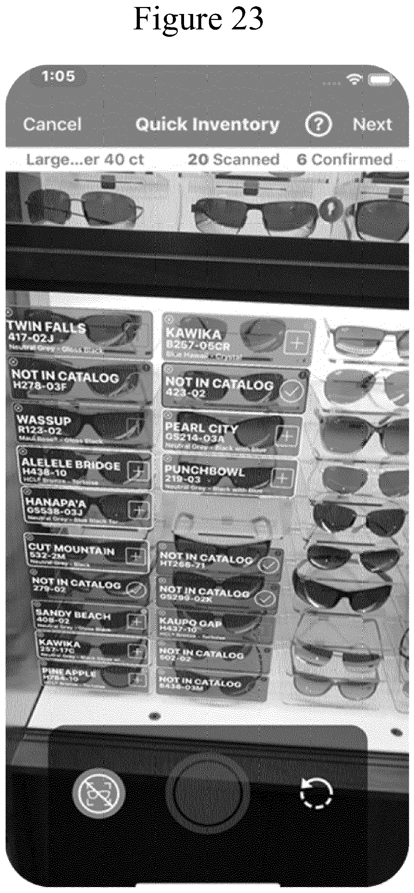

Figure 23 is an example screenshot showing augmented reality (AR) data. Once everything is aligned the AR mode overlays info about each product on the display. The user can confirm the model results in AR or static confirmation. There may be custom user interface elements that provide feedback when the model is uncertain or needs user input. As the model is further trained, the human input and requirements may be minimized. As products are confirmed, they are tracked.

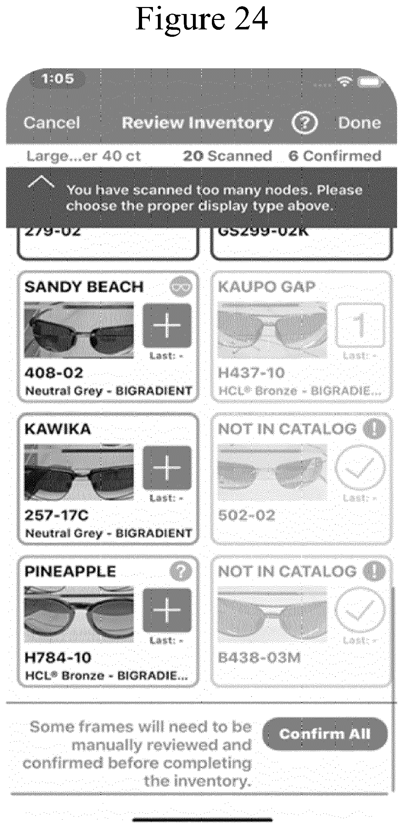

Figure 24 is an example screenshot showing static confirmation. 3D real-world data is mapped to 2D using advanced algorithms. This may provide a more comfortable experience for confirming model results. There may be a grid-based view that is intuitive and supports pan and pinch-to-zoom. Advancing from this screen may send the user to a review screen.

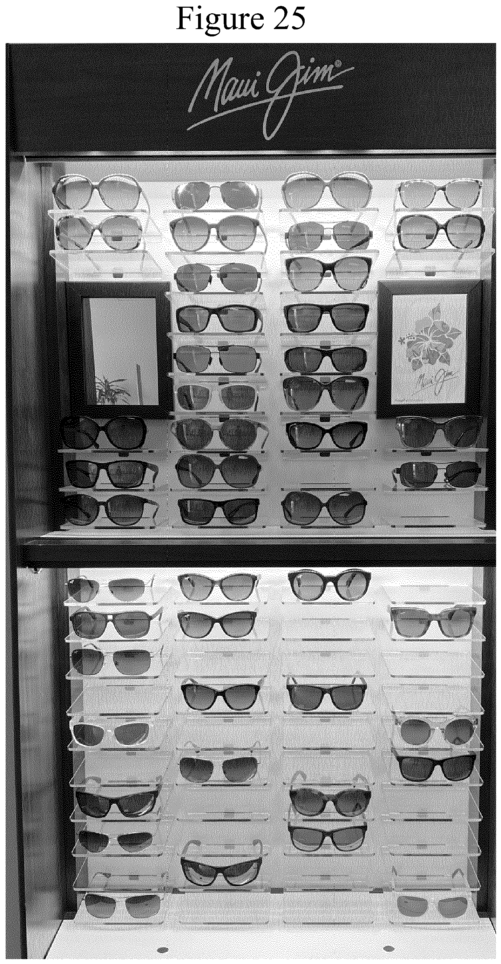

Figure 25 is an example screenshot showing a source display. This may be a real display of products that is to be analyzed using the inventory product tool. In this example, sunglasses are shown for analysis, but the analysis may be performed for other products and sunglasses are merely one example. The source display organization is maintained by the AR system when performing the inventory analysis as shown in the other examples. Specifically, the positions can be preserved while translating the products into SKUs with other information in a confirmation screen.

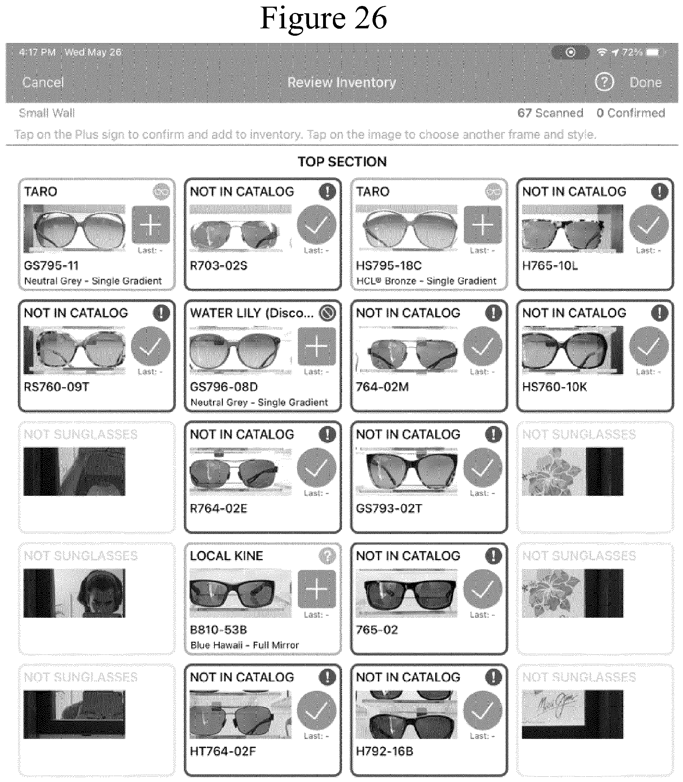

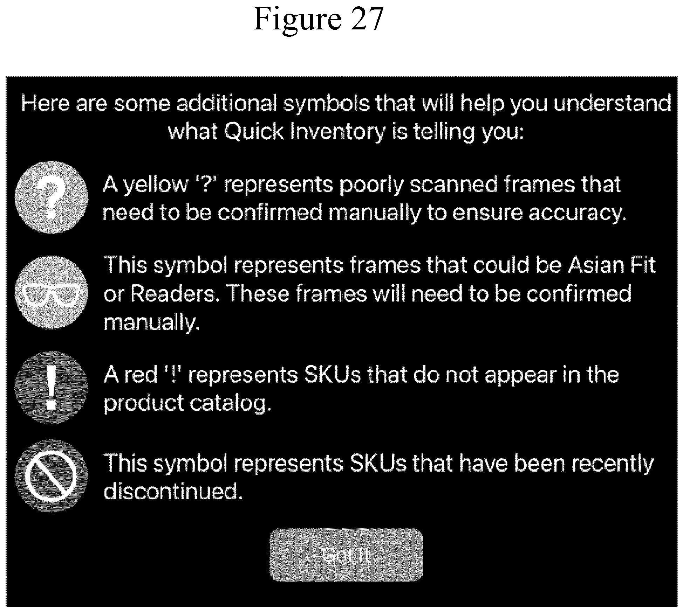

Figure 26 is an example screenshot showing an example of product confirmation. The organization may match the source display from Figure 25, but includes the information about each product that is identified based on the analysis. This allows a user to accept or modify the SKU determination and other details. Figure 27 describes some of the indicators that are shown in Figure 25. In addition, the check mark indicator indicates a product that is not in a catalog or recognized. The plus button allows the user to confirm and add the product to the inventory.

Figure 27 is an example screenshot showing indicators for the product confirmation. The question mark indicator reflects a poorly scanned product that must be confirmed manually. The eyeglass symbol represents frames that could be a different type (e.g. Asian Fit or Readers) that must also be confirmed manually. The exclamation mark represents products that are not in the catalog and cannot be inventoried until added. The strikethrough symbol is for products that were discontinued.

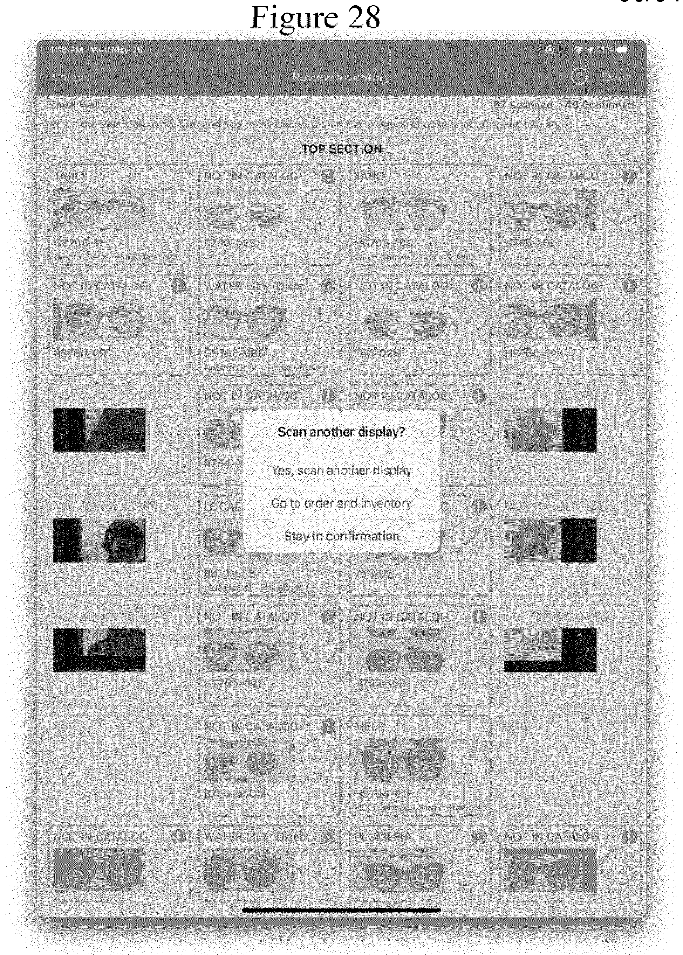

Figure 28 is an example screenshot showing an example prompt for inventory confirmation. This screenshot shows the prompt that the user sees when finishing the inventory confirmation, prior to translating the inventory to an "Inventory and Order" screen. There may be multiple source displays (e.g. Figure 25) that are each scanned separately for tracking inventory.

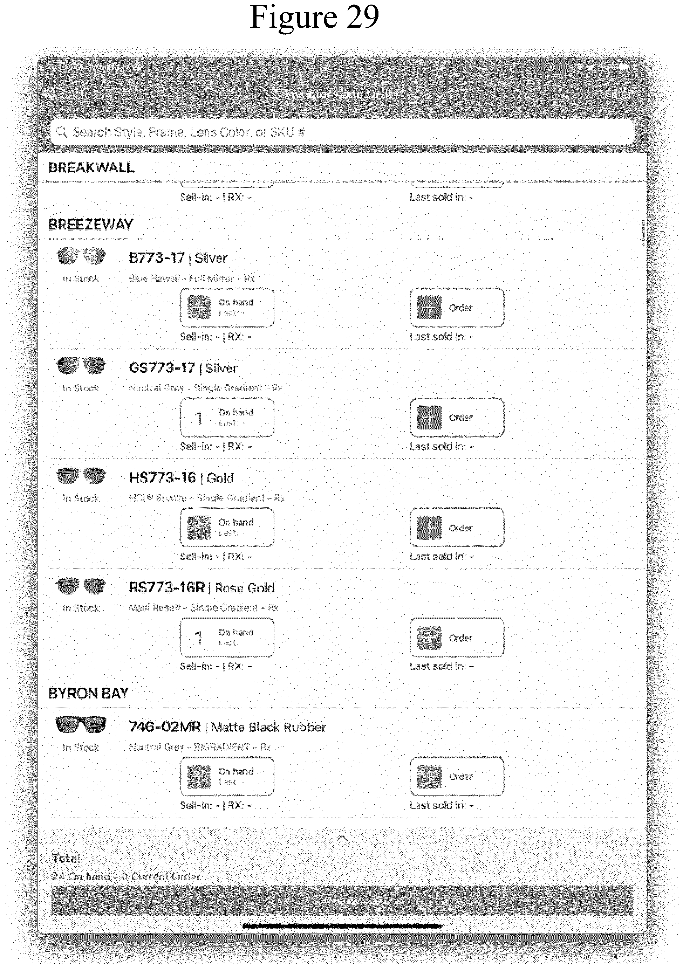

Figure 29 is an example screenshot showing an example of results from the inventory confirmation. This screenshot shows the results of using a Quick Inventory function in the original "Inventory and Order" system. Users can manually tap on each SKU, incrementing the inventory count (left column) or order count (right column). By confirming the scan results during a Quick Inventory function, the inventory count may be automatically incremented when the user arrives at this screen. Specifically, Figure 29 shows that SKUs GS773-17 and RS773-16R have their inventory quantity of "1" in the screenshot.

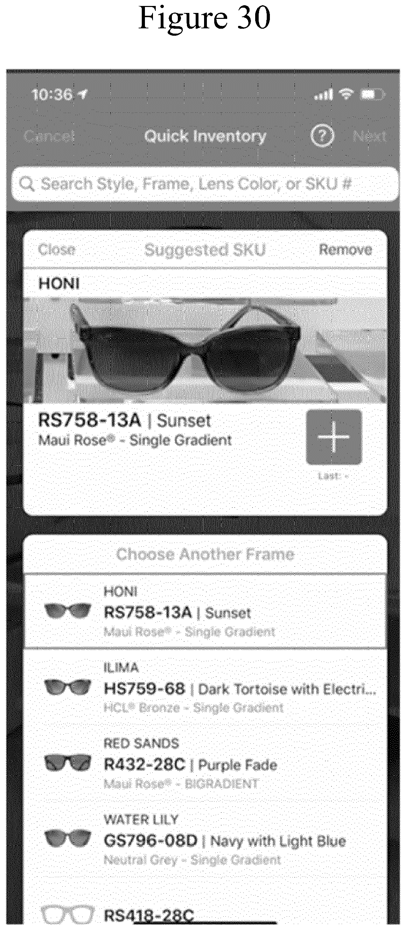

Figure 30 is an example screenshot showing metadata corrections. The user can then change the product if it was shown incorrectly. This is used for machine-learning to improve the accuracy.

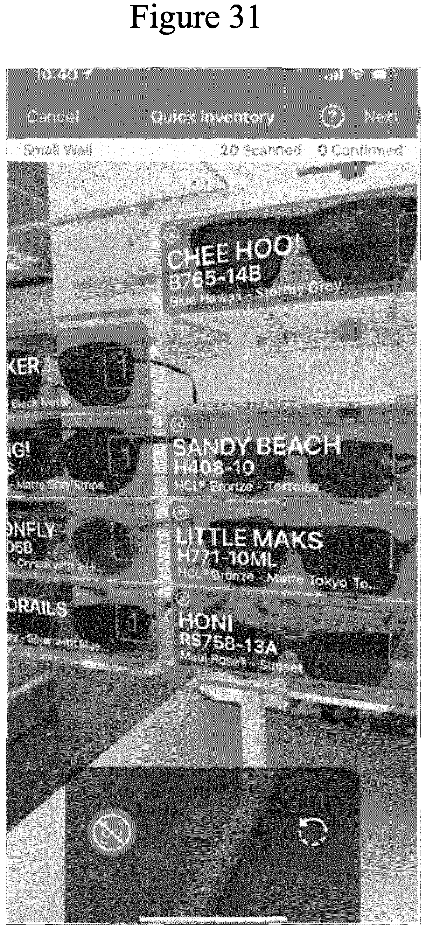

Figure 31 is an example screenshot showing metadata display with augmented reality (AR). Specifically, this embodiment illustrates the quantity (inventory) for each product on the right side (listed as 1 for each product).

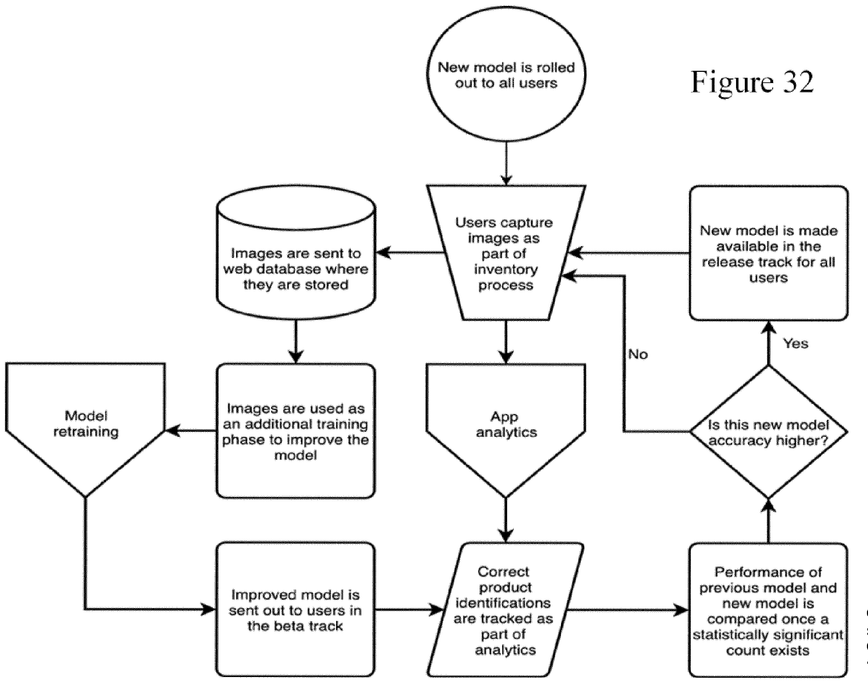

Figure 32 is a flow chart of an improve phase. Figure 32 is one embodiment of the Improve step illustrated in block 212 of Figure 2. The improve phase may include data gathered in the application that is used to improve model accuracy with real-world images. The new model is rolled out to all users. The users continue to capture images as part of the inventory process. Those images are sent for storage at the web database. The images are used as an additional training phase to improve the model for model retraining. The improved model can then be sent out to users in the beta track and product identifications are tracked and the performance of the previous model and the new model are compared. The comparison include determining if the new model has higher accuracy, and if so, the new model is made available in the release track for all users. If the new model is not more accurate, then the users continue to capture images as par to the inventory process. Analytics are collected for the app as part of the improvement phase.

Retraining models allows them to learn from new data captured by users. All images captured by users may stored in a web database over the network 104. These images augment the existing dataset to fine-tune the model for real-world performance. Accuracy between versions can be tracked and compared. As new models are trained with field data, they can migrate from beta to release status.

The process described herein may be subject to different embodiments that the example embodiments described. For example, the inventory system may not be a solely self contained software tool or process. The image acquisition and usage process may improve utility and ease of use of connected or otherwise available business systems. The results of the classification and confirmation data can be sent to a Supply Chain Management (SCM) system for use in completing orders for novice users that may not otherwise be able to efficient, accurately, or quickly make product identification decisions. The results could also be used with other business systems that interact with real world objects, settings and beings. In another embodiment, enterprise resource planning (ERP) systems could leverage the classifications for asset management or more efficient facility operations and logistics support. In another embodiment, Customer Relationship Management (CRM) systems could use this system for contextual customer information delivery, personnel or facial recognition, or other marketing automation features. In another embodiment, Learning Management Systems (LMS), or Knowledge Management and Learning Experience Platforms (LXP) could use this for provision of relevant training or performance support materials at time-of-need. In another embodiment, Business Process Management, Task Management or Work Order systems could use this system for provision of repair records, instructions or checklists delivers via recognized objects.

The system and process described above may be encoded in a signal bearing medium, a computer readable medium such as a memory, programmed within a device such as one or more integrated circuits, one or more processors or processed by a controller or a computer. That data may be analyzed in a computer system and used to generate a spectrum. If the methods are performed by software, the software may reside in a memory resident to or interfaced to a storage device, synchronizer, a communication interface, or non-volatile or volatile memory in communication with a transmitter. A circuit or electronic device designed to send data to another location. The memory may include an ordered listing of executable instructions for implementing logical functions. A logical function or any system element described may be implemented through optic circuitry, digital circuitry, through source code, through analog circuitry, through an analog source such as an analog electrical, audio, or video signal or a combination. The software may be embodied in any computer-readable or signal-bearing medium, for use by, or in connection with an instruction executable system, apparatus, or device. Such a system may include a computer-based system, a processorcontaining system, or another system that may selectively fetch instructions from an instruction executable system, apparatus, or device that may also execute instructions.

A "computer-readable medium," "machine readable medium," "propagated-signal" medium, and/or "signal-bearing medium" may comprise any device that includes stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection "electronic" having one or more wires, a portable magnetic or optical disk, a volatile memory such as a Random Access Memory "RAM", a Read-Only Memory "ROM", an Erasable Programmable Read-Only Memory (EPROM or Flash memory), or an optical fiber. A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The phrase "coupled with" is defined to mean directly connected to or indirectly connected through one or more intermediate components. Such intermediate components may include both hardware and software based components. Variations in the arrangement and type of the components may be made without departing from the spirit or scope of the claims as set forth herein. Additional, different or fewer components may be provided.

The above disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description. While various embodiments of the invention have been described, it will be apparent to those of ordinary skill in the art that many more embodiments and implementations are possible within the scope of the invention. Accordingly, the invention is not to be restricted except in light of the attached claims and their equivalents.

The invention is further described in the following items.
1. A method for visual product identification comprising:
   providing augmented reality guides for image collection of one or more products;
   receiving metadata related to the product from the image collection;
   generating a model for checking and monitoring the received metadata;
   providing the model for usage for product identification; and
   improving the model based on data gathered from the usage of the model.
2. The method of item 1, further comprising:
   receiving, from a user, one or more images for each of the products for the image collection, wherein the user takes pictures of the products and those pictures are uploaded as the one or more images for the image collection.
3. The method of item 2, wherein the user utilizes an application on a computing device for taking the pictures and uploading the one or more images for the image collection.
4. The method of item 3, wherein the augmented reality guides comprise feedback to the user, further wherein the feedback to the user includes alignment for taking the pictures.
5. The method of item 4, wherein the feedback comprises one or more prompts for moving the computing device for the alignment of the products including centering and adjusting a plane for the alignment.
6. The method of item 4, wherein the feedback comprises one or more shape outlines for aligning the products for the taking of the pictures.
7. The method of any of the items 3-6, wherein the taking the pictures is automated by the application based on a real-time detection of the one or more products.
8. The method of any preceding item, further comprising:
   providing an identification for the one or more products based on an output from the model.
9. The method of item 8, further comprising:
   displaying the metadata for the one or more products based on the identification.
10. The method of any preceding item, wherein the improving the model comprises a feedback loop that iteratively and automatically updates the model.
11. A method for image acquisition comprising:
   providing an interface for a user to view items;
   providing feedback for the capturing to a user to assist with an alignment for the items;
   capturing, based on the interface, one or more images of the items; and
   displaying the one or more images with metadata for each of the items.
12. The method of item 11, wherein the capturing is automated, wherein the one or more images are captured when the alignment is recognized.
13. The method of item 11 or 12, wherein the metadata includes an identification for each of the items.
14. The method of item 13, further comprising:
   maintaining an inventory of the items; and
   updating the inventory based on the capturing.
15. The method of item 13 or 14, wherein the capturing is by a computing device with a camera and a display, wherein the camera is used for the capturing and the display is used for displaying the one or more images in real-time with the metadata.
16. A method for augmented reality product identification comprising:
   detecting a product;
   generating a model for checking and monitoring metadata for the detected product;
   utilizing the model for the product identification; and
   updating the model based on data gathered from the utilizing.
17. The method of item 16, wherein the product identification is for inventory tracking.
18. The method of item 16 or 17, wherein the updating the model comprises a feedback loop that iteratively and automatically updates the model each time the model is used for the product identification.
19. The method of any of the items 16-18, wherein the metadata for a particular product comprises an identification of the particular product.
20. The method of any of the items 16-19, wherein the detecting comprises:
   providing an interface for a user to view the product; and
   capturing, automatically based on the interface, one or more images of the product.

## Claims

1. A method for visual product identification comprising:
providing augmented reality guides for image collection of one or more products;
receiving metadata related to the product from the image collection;
generating a model for checking and monitoring the received metadata;
providing the model for usage for product identification; and
improving the model based on data gathered from the usage of the model.

2. The method of claim 1, further comprising:
receiving, from a user, one or more images for each of the products for the image collection, wherein the user takes pictures of the products and those pictures are uploaded as the one or more images for the image collection.

3. The method of claim 2, wherein the user utilizes an application on a computing device for taking the pictures and uploading the one or more images for the image collection, wherein the augmented reality guides comprise feedback to the user, further wherein the feedback to the user includes alignment for taking the pictures.

4. The method of claim 3, wherein the feedback comprises one or more prompts for moving the computing device for the alignment of the products including centering and adjusting a plane for the alignment.

5. The method of any of the claims 3-4, wherein the taking the pictures is automated by the application based on a real-time detection of the one or more products.

6. The method of any preceding claim, further comprising:
providing an identification for the one or more products based on an output from the model.

7. The method of any preceding claim, wherein the improving the model comprises a feedback loop that iteratively and automatically updates the model.

8. A method for image acquisition comprising:
providing an interface for a user to view items;
providing feedback for the capturing to a user to assist with an alignment for the items;
capturing, based on the interface, one or more images of the items; and
displaying the one or more images with metadata for each of the items.

9. The method of claim 8, wherein the capturing is automated, wherein the one or more images are captured when the alignment is recognized.

10. The method of claim 8 or 9, further comprising:
maintaining an inventory of the items; and
updating the inventory based on the capturing.

11. The method of any of the claims 8-10, wherein the capturing is by a computing device with a camera and a display, wherein the camera is used for the capturing and the display is used for displaying the one or more images in real-time with the metadata.

12. A method for augmented reality product identification comprising:
detecting a product;
generating a model for checking and monitoring metadata for the detected product;
utilizing the model for the product identification; and
updating the model based on data gathered from the utilizing.

13. The method of claim 12, wherein the updating the model comprises a feedback loop that iteratively and automatically updates the model each time the model is used for the product identification.

14. The method of any of the claims 12-13, wherein the metadata for a particular product comprises an identification of the particular product.

15. The method of any of the claims 12-14, wherein the detecting comprises:
providing an interface for a user to view the product; and
capturing, automatically based on the interface, one or more images of the product.
